# EUROPEAN PATENT SPECIFICATION

(11) **EP 1 769 672 B1**
(45) Date of publication and mention of the grant of the patent: **09.07.2008**
(21) Application number: 06076704.3
(22) Date of filing: 11.09.2006
(51) Int. Cl.: A01D 80/02

(54) **A haymaking machine for displacing crop lying on the ground and a tine for such a haymaking machine**
Heuwerbungsmaschine zum Versetzen von auf dem Boden liegendem Erntegut und Zinken für eine dergleiche Heuwerbungsmachine.
Machine de fenaison pour déplacer des végétaux se trouvant sur le sol et dent pour une telle machine de fenaison.

(30) Priority: 30.09.2005 NL 1030079
(43) Date of publication of application: 04.04.2007
(73) Proprietor: MAASLAND N.V., 3147 PA Maassluis (NL)
(72) Inventor: Havermans, Cornelis Christianus Franciscus, 4761 WX Zevenbergen (NL)
(74) Representative: Corten, Maurice Jean F.M.

(56) References cited:
- DE-A1- 2 300 969
- DE-A1- 3 133 843
- FR-A- 1 414 080
- NL-A- 297 582
- NL-A- 6 502 898
- US-A- 4 473 994

## Description

The present invention relates to a haymaking machine for displacing crop lying on the ground according to the preamble of claim 1.

Such a tine is known from German patent application DE-3133843-A1. This document discloses a haymaking machine comprising a rotor with controlled arms. Tines having windings at their upper sides are fastened on these arms. Approximately half-way the tine is curved so as to have an arc-shaped middle piece and a free end in its prolonged portion. Said free end is orientated in the direction of travel. The lower part of the arc-shaped middle piece extends obliquely forwards in the direction of travel so as to be able to act as a support for the crop to be picked up.

A disadvantage of such a tine is that, when coming into contact with the ground, the tine will easily penetrate into the ground. This may lead to earth being taken along, resulting in contamination of the crop. This effect occurs in particular in case of bumpy grounds.

The present invention aims inter alia at providing a tine having a proper transport effect and causing little contamination.

For this purpose, a tine of the above-described type according to the invention is characterized by the features of claim 1. There is thus obtained a tine whose end portion, in the operative position, is at an angle to the middle piece in said vertical plane. When coming into contact with the ground, the end piece will less easily penetrate into the ground and, consequently, cause less contamination. After the crop has been picked up by the end piece, it can be taken along further by the arc-shaped portion, at some distance from the ground.

In the operative position, the end piece is preferably orientated in a pointing manner relative to the ground. A pointing tine can pick up the crop more easily.

According to a favourable embodiment of the invention, in the operative position, the end piece is orientated perpendicular, at any rate at least approximately perpendicular to the ground. Such a perpendicular position minimises the tendency to penetrate into the ground, whereas the end piece nevertheless picks up the crop properly, without the crop being inclined to slip underneath the tine. By orientation is meant in this context an orientation in an unloaded condition of the tine. When coming into contact with crop or with the ground, this tine will be subjected to a force opposite to the direction of travel. Owing to the resilient effect of the tine, the tine will deflect opposite to the direction of travel, so that the orientation of the end piece will be different from that in an unloaded condition.

In a further favourable embodiment, the end piece comprises a relatively short straight portion relative to the overall length of the tine. Owing to the relatively short length, after having been picked up by the end piece, the crop will easily get into the middle piece and subsequently be taken along by said middle piece.

In a further embodiment according to the invention, the tine comprises at least one complete winding. This results in an even more resilient effect of the tine.

In particular, the axis of symmetry of the winding is perpendicular, at least almost perpendicular to the plane formed by the middle piece. During normal operation, the greatest forces are situated in the plane formed by the middle piece. These forces can be absorbed completely by torsion of the winding or windings.

In a particular embodiment, the winding surrounds the arm at least partially. If the tine breaks at the place of a winding, the remaining part will continue to surround the arm.

Production-technically it is advantageous if the entire tine is constituted by one single strand.

According to another favourable embodiment, the tine comprises a fixation portion for fixation on the arm, the fixation portion being surrounded by two windings. This provides a robust construction that is well resistant to tine breakage.

In a further embodiment, the middle piece is round or oval. This provides a construction without local weak points.

In an alternative embodiment, the middle piece is angular. Such an angular form can easily be achieved from a production-technical view.

In a further alternative embodiment, the arm is fastened to a rotor and a middle piece at the inner side of the rotor comprises a smaller curve or no curve in comparison with a middle piece located further at the outer side of the arm. In this manner, seen in radial direction of the rotor, there is formed a bowl by the tine portions. This results in less crop getting lost at the inner side of the rotor.

The tine is preferably fastened under pretension on the arm. Owing to this, a tine portion will only deflect in case of a high load. Said high load occurs, for example, when the tine touches the ground. At a normal load during transporting crop, the tine portion will maintain its ideal position.

The invention further relates to a tine suitable for use in a haymaking machine according to the invention.

The invention will be explained hereinafter in detail with reference to figures of embodiments.
Figure 1 shows a side view of a haymaking machine according to the invention comprising a rotor with controlled arms;
Figure 2 shows a front view of a detail of a first embodiment of a haymaking machine according to the invention;
Figure 3 shows a side view of a detail of a first embodiment of a haymaking machine according to the invention;
Figure 4 shows a front view of a detail of a second embodiment of a haymaking machine according to the invention;
Figure 5 shows a side view of a detail of a second embodiment of a haymaking machine according to the invention;
Figure 6 shows a side view of a detail of a third embodiment of a haymaking machine according to the invention.

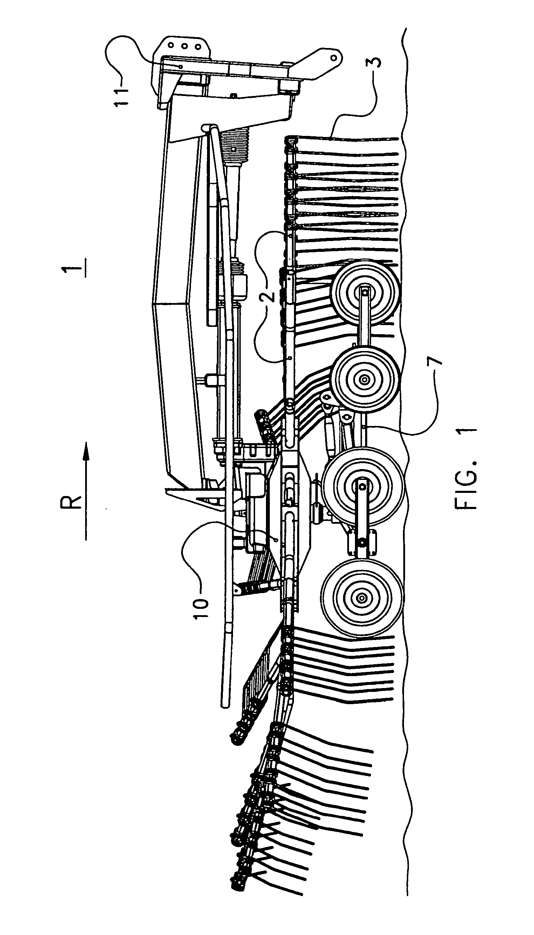

Figure 1 shows a haymaking machine 1 for displacing crop lying on the ground and provided with a preferably controllable arm 2 to which at least one tine 3, 4, 5, 6 is fastened, which tine 3, 4, 5, 6 comprises a fastening piece 7, a middle piece 8 with a portion that is curved in such a way that at least this portion of the tine 3, 4, 5, 6 is suitable for taking along the crop, and an end piece 9 for gripping the crop lying on the ground, which tine 3, 4, 5, 6, during operation under the influence of a movement of the arm 2, assumes an operative position in which the crop lying on the ground is gripped, and the middle piece 8, seen in the direction of travel R, is concave in the vertical plane parallel to the direction of travel R, characterized in that, in the operative position, the end piece 9 is at an angle to the middle piece 8 in said vertical plane. The haymaking machine 1 comprises a wheel set for its support on the ground and a rotor 10 that is drivable, via a drive shaft, by a non-shown tractor. The haymaking machine 1 can be fastened to the tractor via a three-point trestle 11. On the rotor 10 there are disposed arms 2 having at their ends tines 3, 4, 5, 6, each comprising two elongated tine portions. The haymaking machine 1 is of the controlled type, known per se, which means that the tines 3, 4, 5, 6 on the arms 2 of the rotor 10 assume an other angle in dependence on the position of the rotor 10. When the tines 3, 4, 5, 6 are in the operative position, the end pieces 9 are located closest to the ground. During rotation of the rotor 10, said operative position is assumed from roughly the side shown in Figure 1 to the side where the swath is to be deposited. At the rear side of the haymaking machine 1, the arms 2 are rotated in such a way that the tines 3, 4, 5, 6 are in a horizontal position.

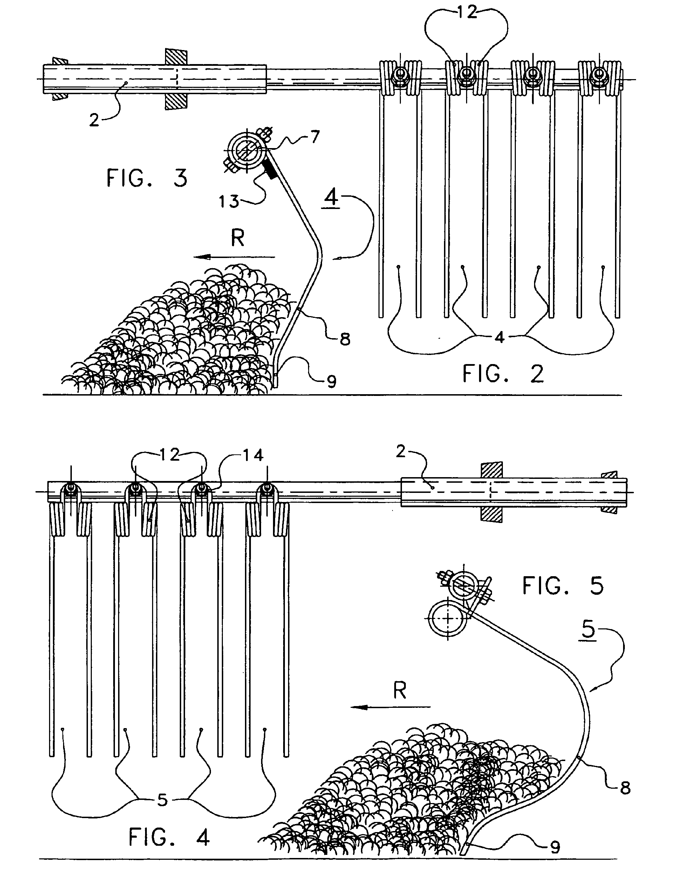

For a more detailed description of the tines 3, 4, 5, 6 reference is made to Figures 2 and 3. Figure 2 shows an arm 2 with four tines 4. Figure 3 shows a side view of said arm 2. In both Figures 2 and 3 the tines 4 are shown in the operative position. The end piece 9 is orientated perpendicular, at any rate at least approximately perpendicular, to the ground and comprises a relatively short straight portion relative to the overall length of the tine 3, 4, 5, 6. The tine 4 comprises at least one complete winding 12, the axis of symmetry of the winding 12 being perpendicular, at least almost perpendicular, to the plane formed by the middle piece 8. Said plane is equal to the vertical plane parallel to the direction of travel R. The windings 12 surround the arm 2, the tine 4 comprising a fixation portion 14 for fixation on the arm 2, the fixation portion 14 being surrounded by two windings 12. The middle piece 8 is angular. This means that the middle piece 8 comprises an almost straight lower portion and an almost straight upper portion, which portions are interconnected via a relatively short curved portion.

On the arm 2 there is disposed a stop 13 against which the tine 4 pushes. In this manner the tine 4 is fastened under pretension on the arm 2. This pretension ensures that the tine 4 will only deflect opposite to the direction of travel R when the pushing force against the crop or the ground has reached a limit value. Said stop 13 is adjustable so that the pretension force and consequently the limit value can be adapted to the crop and the soil conditions.

Figures 4 and 5 show an alternative embodiment of the haymaking machine 1. In comparison with the tines 4 of Figures 2 and 3, the windings 12 of the tine 5 do not surround the arm 2, but the fixation portion 14 extends to outside the circumference of the windings 12. In case of the tine 5 illustrated here, the middle piece 8 is round and the end piece 9 is orientated in the operative position in a pointing manner relative to the ground.

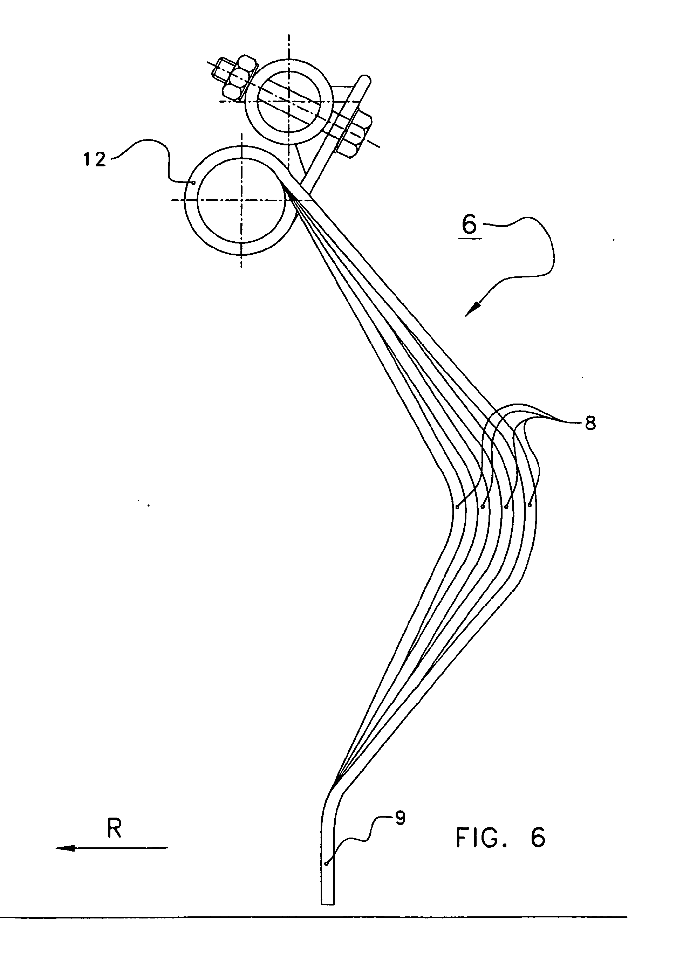

Figure 6 shows a third embodiment of a tine 6 according to the invention applied to a haymaking machine 1 with a rotor. There is shown an arm 2 with several tines 6, a middle piece 8 at the inner side of the rotor 10 comprising a smaller curve or no curve in comparison with a middle piece 8 located further at the outer side of the arm 2. There are shown in total four tine portions whose end pieces 9 extend in a straight row transversely to the direction of travel R. The middle pieces 8 form in radial direction a bowl-shaped space that prevents crop from getting at the inner side of the rotor 10. In a non-shown alternative embodiment, the tine portions form a bowl-shaped space also at the outer side of the rotor 10. All tines 3, 4, 5, 6 are constituted by one single strand of spring steel.

The mode of operation of the haymaking machine 1 is briefly described as follows. The rotor 10 rotates, causing the arm 2 to assume an operative position about its own axis, the tines 3, 4, 5, 6 assuming a downward orientation. In this operative position (Figures 3, 5 and 6) the crop lying on the ground is gripped by the end piece 9. The crop is pushed upwards, so that it will be located on the middle piece 8. The greater part of the crop gripped is taken along by the middle piece 8 in rotation around the axis of rotation of the rotor 10. At the swath forming side, the arm 2 rotates in such a way that the tines (3, 4, 5, 6) will assume a horizontal position. This rotation causes the crop to slide from the middle piece 8 and to be deposited in a swath.

It will be obvious that the invention is not limited to the described embodiments of the tines 3, 4, 5, 6 and of a haymaking machine 1 of the controlled arm type. The invention is also applicable to hay tedders and to rakes with other types of drive, such as belt rakes. The inventive tines 3, 4, 5, 6 are also applicable in a pick-up device of, for example, a bale press or in leaf raking machines. The tines 3, 4, 5, 6 may also comprise only one elongated tine portion and may comprise any possible number of windings 12.

## Claims

1. A haymaking machine (1) for displacing crop lying on the ground and provided with a preferably controllable arm (2) to which at least one tine (3, 4, 5, 6) is fastened, which tine (3, 4, 5, 6) comprises a fastening piece (7), a middle piece (8) with a portion that is curved in such a way that at least this portion of the tine (3, 4, 5, 6) is suitable for taking along the crop, and an end piece (9) for gripping the crop lying on the ground, which tine (3, 4, 5, 6), during operation under the influence of a movement of the arm (2), assumes an operative position in which the crop lying on the ground is gripped, and in which the middle piece (8), seen in the direction of travel R, is concave in the vertical plane parallel to the direction of travel R, **characterized in that**, in the operative position, the end piece (9) is at an angle to the middle piece (8) in said vertical plane.

2. A haymaking machine (1) as claimed in claim 1, **characterized in that**, in the operative position, the end piece (9) is orientated in a pointing manner relative to the ground.

3. A haymaking machine (1) as claimed in claim 1, **characterized in that**, in the operative position, the end piece (9) is orientated perpendicular, at any rate at least approximately perpendicular to the ground.

4. A haymaking machine (1) as claimed in any one of the preceding claims, **characterized in that** the end piece (9) comprises a relatively short straight portion relative to the overall length of the tine (3, 4, 5, 6).

5. A haymaking machine (1) as claimed in any one of the preceding claims, **characterized in that** the tine (3, 4, 5, 6) comprises at least one complete winding (12).

6. A haymaking machine (1) as claimed in claim 5, **characterized in that** the axis of symmetry of the winding (12) is perpendicular, at least almost perpendicular to the plane formed by the middle piece (8).

7. A haymaking machine (1) as claimed in claim 6, **characterized in that** the winding (12) surrounds the arm (2) at least partially.

8. A haymaking machine (1) as claimed in any one of the preceding claims, **characterized in that** the entire tine (3, 4, 5, 6) is constituted by one single strand.

9. A haymaking machine (1) as claimed in any one of the preceding claims, **characterized in that** the tine (3, 4, 5, 6) comprises a fixation portion (14) for fixation on the arm (2), the fixation portion (14) being surrounded by two windings (12).

10. A haymaking machine (1) as claimed in any one of the preceding claims, **characterized in that** the middle piece (8) is round or oval.

11. A haymaking machine (1) as claimed in any one of the preceding claims, **characterized in that** the middle piece (8) is angular.

12. A haymaking machine (1) as claimed in any one of the preceding claims, **characterized in that** the arm (2) is fastened to a rotor (10) and a middle piece (8) at the inner side of the rotor (10) comprising a smaller curve or no curve in comparison with a middle piece (8) located further at the outer side of the arm (2).

13. A haymaking machine (1) as claimed in any one of the preceding claims, **characterized in that** the tine (3, 4, 5, 6) is fastened under pretension on the arm (2).

14. A tine (3, 4, 5, 6) suitable for use in a haymaking machine (1) as claimed in any one of the preceding claims.

## Patentansprüche

1. Heuwerbungsmaschine (1) zum Verlagern von auf dem Boden liegendem Erntegut, die mit einem vorzugsweise lenkbaren Arm (2) versehen ist, an dem mindestens ein Zinken (3, 4, 5, 6) befestigt ist, wobei der Zinken (3, 4, 5, 6) einen Befestigungsteil (7), einen Mittelteil (8) mit einem Abschnitt, der derart gekrümmt ist, dass zumindest dieser Abschnitt des Zinkens (3, 4, 5, 6) zur Mitnahme des Erntegutes geeignet ist, und einen Endteil (9) zum Erfassen des auf dem Boden liegenden Erntegutes umfasst, wobei der Zinken (3, 4, 5, 6) im Betrieb unter dem Einfluss einer Bewegung des Armes (2) eine Arbeitsposition einnimmt, in der das auf dem Boden liegende Erntegut erfasst wird, und in der der Mittelteil (8) in Fahrtrichtung R gesehen konkav in der vertikalen Ebene parallel zur Fahrtrichtung R angeordnet ist,
**dadurch gekennzeichnet, dass** in der vertikalen Ebene der Endteil (9) in der Arbeitsposition in einem Winkel zum Mittelteil (8) angeordnet ist.

2. Heuwerbungsmaschine (1) nach Anspruch 1,
**dadurch gekennzeichnet, dass** der Endteil (9) in der Arbeitsposition derart ausgerichtet ist, dass er auf den Boden weist.

3. Heuwerbungsmaschine (1) nach Anspruch 1,
**dadurch gekennzeichnet, dass** der Endteil (9) in der Arbeitsposition senkrecht, jedenfalls zumindest annähernd senkrecht zum Boden ausgerichtet ist.

4. Heuwerbungsmaschine (1) nach einem der vorhergehenden Ansprüche,
**dadurch gekennzeichnet, dass** der Endteil (9) einen im Verhältnis zur Gesamtlänge des Zinkens (3, 4, 5, 6) relativ kurzen, geraden Abschnitt umfasst.

5. Heuwerbungsmaschine (1) nach einem der vorhergehenden Ansprüche,
**dadurch gekennzeichnet, dass** der Zinken (3, 4, 5, 6) mindestens eine vollständige Windung (12) umfasst.

6. Heuwerbungsmaschine (1) nach Anspruch 5,
**dadurch gekennzeichnet, dass** sich die Symmetrieachse der Windung (12) senkrecht, zumindest nahezu senkrecht zu der durch den Mittelteil (8) gebildeten Ebene erstreckt.

7. Heuwerbungsmaschine (1) nach Anspruch 6,
**dadurch gekennzeichnet, dass** die Windung (12) den Arm (2) zumindest teilweise umschließt.

8. Heuwerbungsmaschine (1) nach einem der vorhergehenden Ansprüche,
**dadurch gekennzeichnet, dass** der gesamte Zinken (3, 4, 5, 6) einstückig ausgebildet ist.

9. Heuwerbungsmaschine (1) nach einem der vorhergehenden Ansprüche,
**dadurch gekennzeichnet, dass** der Zinken (3, 4, 5, 6) einen Befestigungsabschnitt (14) zur Befestigung an dem Arm (2) umfasst, wobei der Befestigungsabschnitt (14) von zwei Windungen (12) umschlossen ist.

10. Heuwerbungsmaschine (1) nach einem der vorhergehenden Ansprüche,
**dadurch gekennzeichnet, dass** der Mittelteil (8) rund oder oval ist.

11. Heuwerbungsmaschine (1) nach einem der vorhergehenden Ansprüche,
**dadurch gekennzeichnet, dass** der Mittelteil (8) winkelförmig ist.

12. Heuwerbungsmaschine (1) nach einem der vorhergehenden Ansprüche,
**dadurch gekennzeichnet, dass** der Arm (2) an einem Rotor (10) befestigt ist und ein an der Innenseite des Rotors (10) angeordneter Mittelteil (8) im Vergleich zu einem weiter außen an der Außenseite des Armes (2) angeordneten Mittelteil (8) eine geringere Krümmung oder gar keine Krümmung aufweist.

13. Heuwerbungsmaschine (1) nach einem der vorhergehenden Ansprüche,
**dadurch gekennzeichnet, dass** der Zinken (3, 4, 5, 6) mit Vorspannung beaufschlagt an dem Arm (2) befestigt ist.

14. Zinken (3, 4, 5, 6) zum Einsatz in einer Heuwerbungsmaschine (1) nach einem der vorhergehenden Ansprüche.

## Revendications

1. Machine de fenaison (1) pour déplacer des végétaux se trouvant sur le sol et dotée d'un bras pouvant être de préférence commandé (2) sur lequel au moins une dent (3, 4, 5, 6) est fixée, laquelle dent (3, 4, 5, 6) comprend une pièce de fixation (7), une pièce centrale (8) dotée d'une partie qui est courbée de telle façon qu'au moins cette partie de la dent (3, 4, 5, 6) est appropriée pour être prise le long du végétal, et une pièce d'extrémité (9) pour saisir le végétal se trouvant sur le sol, laquelle dent (3, 4, 5, 6), lors du fonctionnement sous l'influence d'un mouvement du bras (2), prend une position de fonctionnement dans laquelle le végétal se trouvant sur le sol est saisi, et dans laquelle la pièce centrale (8), visible dans la direction d'une trajectoire R, est concave dans le plan vertical parallèle à la direction de la trajectoire R, **caractérisée en ce que**, dans la position de fonctionnement, la pièce d'extrémité (9) se trouve au niveau d'un angle jusqu'à la pièce centrale (8) dans ledit plan vertical.

2. Machine de fenaison (1) selon la revendication 1, **caractérisée en ce que**, dans la position de fonctionnement, la pièce d'extrémité (9) est orientée d'une façon pointée par rapport au sol.

3. Machine de fenaison (1) selon la revendication 1, **caractérisée en ce que**, dans la position de fonctionnement, la pièce d'extrémité (9) est orientée de façon perpendiculaire, à une quelconque proportion au moins approximativement perpendiculaire au sol.

4. Machine de fenaison (1) selon l'une quelconque des revendications précédentes, **caractérisée en ce que** la pièce d'extrémité (9) comprend une partie droite relativement courte par rapport à la longueur entière de la dent (3, 4, 5, 6).

5. Machine de fenaison (1) selon l'une quelconque des revendications précédentes, **caractérisée en ce que** la dent (3, 4, 5, 6) comprend au moins un enroulement complet (12).

6. Machine de fenaison (1) selon la revendication 5, **caractérisée en ce que** l'axe de symétrie de l'enroulement (12) est perpendiculaire, au moins presque perpendiculaire au plan formé par la pièce centrale (8).

7. Machine de fenaison (1) selon la revendication 6, **caractérisée en ce que** l'enroulement (12) entoure au moins partiellement le bras (2).

8. Machine de fenaison (1) selon l'une quelconque des revendications précédentes, **caractérisée en ce que** la dent entière (3, 4, 5, 6) est constituée d'un fil simple.

9. Machine de fenaison (1) selon l'une quelconque des revendications précédentes, **caractérisée en ce que** la dent (3, 4, 5, 6) comprend une partie de fixation (14) pour une fixation sur le bras (2), la partie de fixation (14) étant entourée par deux enroulements (12).

10. Machine de fenaison (1) selon l'une quelconque des revendications précédentes, **caractérisée en ce que** la pièce centrale (8) est ronde ou ovale.

11. Machine de fenaison (1) selon l'une quelconque des revendications précédentes, **caractérisée en ce que** la pièce centrale (8) est angulaire.

12. Machine de fenaison (1) selon l'une quelconque des revendications précédentes, **caractérisée en ce que** le bras (2) est fixé sur un rotor (10) et une pièce centrale (8) au niveau du côté interne du rotor (10) comprenant une courbe plus petite ou aucune courbe par rapport à une pièce centrale (8) située plus loin au niveau du côté externe du bras (2).

13. Machine de fenaison (1) selon l'une quelconque des revendications précédentes, **caractérisée en ce que** la dent (3, 4, 5, 6) est fixée sous précontrainte par prétension sur le bras (2).

14. Dent (3, 4, 5, 6) appropriée pour une utilisation dans une machine de fenaison (1) selon l'une quelconque des revendications précédentes.
